# EUROPEAN PATENT APPLICATION

(11) **EP 4 270 566 A1**
(43) Date of publication of application: **01.11.2023**
(21) Application number: 21911583.9
(22) Date of filing: 23.12.2021
(51) Int. Cl.: H01M 10/04

(54) **METHOD AND DEVICE FOR MANUFACTURING UNIT CELL**

(30) Priority: 23.12.2020 KR 20200182654
(71) Applicant: LG Energy Solution, Ltd., Seoul 07335 (KR)
(72) Inventor: PARK, Dong Hyeuk, Daejeon 34122 (KR); LEE, Hyeon Jin, Daejeon 34122 (KR); KIM, Sang Wook, Daejeon 34122 (KR); YANG, Gi, Daejeon 34122 (KR)
(74) Representative: Goddar, Heinz J.
(86) International application number: PCT/KR2021/019759
(87) International publication number: WO 2022/139518

(57) **Abstract**

The present invention relates to an apparatus for manufacturing a unit cell, which cuts a lower separator and an upper separator between electrodes adjacent to each other in a process of manufacturing the unit cell provided in a state, in which the lower separator and the upper separator continuously move in a longitudinal direction, and the electrodes are stacked between the lower separator and the upper separator and on the upper separator, respectively, the apparatus comprising: a lower block which is disposed under the lower separator and on which a protrusion is formed at each of both sides thereof with a recessed groove therebetween on a top surface thereof; an upper block which is disposed above the upper separator so as to be vertically aligned with the lower block and on which a protrusion is formed at each of both sides with a recessed groove therebetween on a bottom surface thereof; and a heating wire cutter disposed in any one of the recessed groove of the lower block or the recessed groove of the upper block to cut each of the separators using heat when being in contact with the separator, wherein, when the lower block and the upper block press the lower separator and the upper separator, the heating wire cutter is in contact with the separators to cut the separators.

## Description

### CROSS-REFERENCE TO RELATED APPLICATION

The present application claims the benefit of the priority of Korean Patent Application No. 10-2020-0182654, filed on December 23, 2020, which is hereby incorporated by reference in its entirety.

### TECHNICAL FIELD

The present invention relates to a method and apparatus for manufacturing a unit cell, and more particularly, to a method and apparatus for manufacturing a unit cell, in which cutting is performed in a state in which bonding (sealing) between a lower separator and an upper separator is performed, or boding and cutting are performed at the same time to prevent the separator from being folded.

### BACKGROUND ART

Recently, many studies on secondary batteries are being carried out because the secondary batteries are rechargeable unlike primarily batteries, and also, the possibility of compact size and high capacity is high. As technology development and demands for mobile devices increase, the demands for secondary batteries as energy sources are rapidly increasing.

Such a secondary battery is configured so that an electrode assembly is embedded in a battery case (for example, a pouch, a can, and the like). The electrode assembly mounted in the battery case is repeatedly chargeable and dischargeable because of a structure in which a positive electrode/a separator/a negative electrode are stacked. The electrode assembly is manufactured in various manners. However, generally, the electrode assembly may be manufactured in a manner in which, after a unit cell 4 is prepared in advance, a plurality of units 4 are stacked to manufacture the electrode assembly.

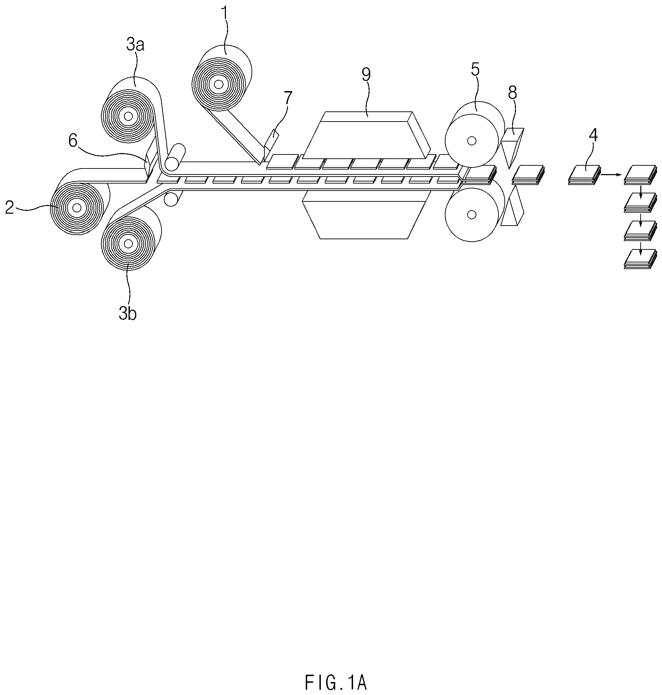

That is, referring to FIG. 1a, which illustrates a state in which a unit cell is manufactured according to the related art, in a method for manufacturing the unit cell 4 according to the related art, a positive electrode 1, an upper separator 3a, a negative electrode 2, and a lower separator 3b are continuously wound to be supplied in a state in which each of the positive electrode 1, the upper separator 3a, the negative electrode 2, and the lower separator 3b is wound in the form of a roll (however, stacking positions of the positive electrode and the negative electrode may be changed).

Here, the separators 3 (3a and 3b) are continuously supplied without disconnection, the negative electrode 2 is supplied between the upper separator 3a and the lower separator 3b, and the positive electrode 1 is supplied onto the upper separator 3a.

Here, the separators 3 are continuously supplied without being cut. On the other hand, the positive electrode 1 and the negative electrode 2 are provided in a state of being cut to predetermined sizes by respective cutters 6 and 7, respectively. The positive electrode 1 and the negative electrode 2 are paired and stacked vertically with the upper separator 3a therebetween and are disposed to be spaced a predetermined distance from the positive electrode 1 and the negative electrode 2, which are paired to be adjacent to each other.

That is, the separators 3 are continuously connected, and the negative electrode 2 and the positive electrode 1 pass through a laminating device 9 in a state of being spaced a predetermined distance from the negative electrode 2 and the positive electrode 1. In the laminating device 9, heat and a pressure are applied so that the negative electrode 2 and the positive electrode 1 are bended to contact points with the separators 3.

After the positive electrode 1 and the negative electrode 2 pass through the laminating device 9 in the state in which the positive electrode 1 and the negative electrode 2 are bonded to the separators 3, the separators 3 are cut to be provided as individual unit cells between the positive electrode 1 and the positive electrode 1, which are adjacent to each other.

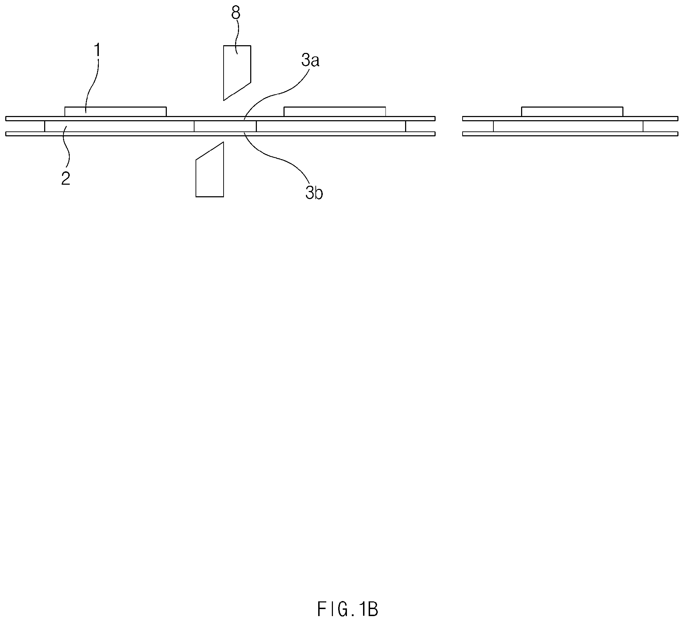

That is, as illustrated in FIG. 1b, which illustrates a shape of a cutter, which cuts the separators, according to the related art, after the laminating (bonding) of the electrodes 1 and 2 and the separators 3 due to the heat and pressure are performed, the separators 3 are cut between the electrodes adjacent to each other to manufacture the individual unit cells 4.

However, the cutter 8 according to the related art has a structure in which the pressure is applied vertically to cut the separators 3. Thus, when any one of the separators 3a and 3b is not properly cut, there is a problem in that the separators 3a and 3b are folded in a direction in which the pressure is applied.

After the unit cells 4 are manufactured, since the plurality of unit cells 4 are stacked to be manufactured as an electrode assembly, the folding of the separators 3 occurs, and thus, when a portion of the negative electrode 2 or the positive electrode 1 is exposed, short circuit occurs inside the electrode assembly.

That is, referring to FIG. 1a, the points at which the separator 3 and the electrodes 1 and 2 are in contact with each other even after passing through a pressing roller 5 by passing through the laminating device 9. However, in the structure according to the related art, the upper separator 3a and the lower separator 3b are not bonded as illustrated in FIG. 1b, but are spaced apart from each other, and thus, there is a problem in that the separators are folded during the cutting.

### DISCLOSURE OF THE INVENTION

### TECHNICAL PROBLEM

Accordingly, a main object of the present invention is to provide a method and apparatus for manufacturing a unit cell, which are capable of preventing an upper separator and a lower separator from being folded.

### TECHNICAL SOLUTION

An apparatus for manufacturing a unit cell, which cuts a lower separator and an upper separator between electrodes (a positive electrode and a negative electrode) adjacent to each other (in a longitudinal direction of the separator) in a process of manufacturing the unit cell provided in a state (i.e., a stacked state in the order of the 'positive electrode/upper separator/negative electrode/lower separator' or the `negative electrode/upper separator/positive electrode/lower separator' from top to bottom), in which the lower separator and the upper separator continuously move in a longitudinal direction, and the electrodes are stacked between the lower separator and the upper separator and on the upper separator, respectively, according to the present invention for achieving the above object comprises: a lower block which is disposed under the lower separator and on which a protrusion is formed at each of both sides thereof with a recessed groove therebetween on a top surface thereof; an upper block which is disposed above the upper separator so as to be vertically aligned with the lower block and on which a protrusion is formed at each of both sides with a recessed groove therebetween on a bottom surface thereof; and a heating wire cutter disposed in any one of the recessed groove of the lower block or the recessed groove of the upper block to cut each of the separators using heat when being in contact with the separator, wherein, when the lower block and the upper block press the lower separator and the upper separator, the heating wire cutter is in contact with the separators to cut the separators.

The heating wire cutter may comprise a nichrome wire, and when current is applied, the nichrome wire may generate resistance heat.

The heating wire cutter may be heated in a range of 200°C to 300°C.

Each of the upper block and the lower block may comprise a built-in heater configured to heat the protrusion, and the separators may be sealed at points at which the protrusions press the separators together.

The lower block may be formed by coupling a lower sealing block, which has a recessed groove and a protrusion and is disposed in a direction facing the lower separator, to a lower heating block provided with a built-in heater, and the upper block may be formed by coupling an upper sealing block, which has a recessed groove and a protrusion and is disposed in a direction facing the upper separator, to an upper heating block provided with a built-in heater.

The heater that is built in each of the lower heating block and the upper heating block may comprise a sheath heater.

The heater that is built in each of the lower heating block and the upper heating block may heat the protrusion in a range of 70°C to 110°C. Each of the lower sealing block and the upper sealing block may be made of a metal material.

Furthermore, a method for manufacturing a unit cell, in which electrodes are stacked between a lower separator and an upper separator and on the upper separator, respectively, provided in the present invention comprises: a process of providing the electrodes and the separators in a state in which the lower separator and the upper separator continuously move in a longitudinal direction, and the electrodes are stacked between the lower separator and the upper separator and on the upper separator, respectively; and a process of applying heat to the lower separator and the upper separator to cut each of the separators by using a heating wire cutter in a state in which the lower separator and the upper separator are pressed upward and downward to be fixed between the electrodes adjacent to each other.

While or before the heating wire cutter applies the heat to the lower separator and the upper separator to cut the lower separator and the upper separator, sealing may be performed at points at which the lower separator and the upper separator are pressed and fixed.

### ADVANTAGEOUS EFFECTS

The present invention having the above-described configuration, since the heating wire cutter fuses and cuts the separator using the heat, the physical pressure may be minimized to significantly reduce the possibility of the folding of the separator.

In addition, each of the lower block and the upper block may have the built-in heater for heating the protrusion. Thus, when the lower block and the upper block press the separator, the separators may be sealed at the points at which the protrusions are pressed. Therefore, since the cutting is performed in the state in which the lower separator and the upper separator are bonded to each other, the folding of the separator may be prevented from occurring.

### BRIEF DESCRIPTION OF THE DRAWINGS

FIG. 1a is a schematic view illustrating a state in which a unit cell is manufactured through a method according to a related art.
FIG. 1b is a simplified side view illustrating a shape of a cutter, which cuts a separator, according to the related art.
FIG. 2 is a simplified view illustrating an apparatus for manufacturing a unit cell according to an embodiment of the present invention.
FIG. 3 is front and bottom views of an upper sealing block.
FIG. 4 is a view illustrating a state in which the apparatus for manufacturing the unit cell is disposed between adjacent electrodes (between adjacent positive electrodes or between adjacent negative electrodes) according to an embodiment of the present invention.
FIG. 5 is a view illustrating a state in which a lower block ascends, and an upper block descends in the state of FIG. 4.
FIG. 6 is a view illustrating a state in which a heating wire cutter descends to cut the separator in the state of FIG. 5.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a method and apparatus for manufacturing a unit cell 4 in which electrodes 1 and 2 are respectively stacked between a lower separator 3b and an upper separator 3a and on the upper separator 3a. Hereinafter, embodiments according to the present invention will be described in more detail with reference to the accompanying drawings.

### First embodiment

The present invention provides a method for manufacturing a unit cell according to a first embodiment. The apparatus for manufacturing the unit cell provided in this embodiment may replace a pressing roller 5 and a cutter 8 for cutting the separator 3 or only the cutter 8 in a process illustrated in FIG. 1a.

That is, in the configuration of FIG. 1a, the pressing roller 5 and the cutter 8 may be removed, or only the cutter 8 may be removed. Then, the apparatus for manufacturing the unit cell, which is provided in this embodiment may be installed instead.

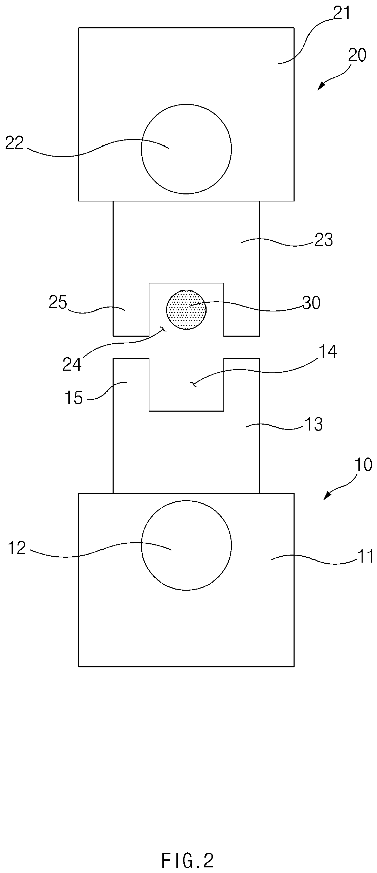

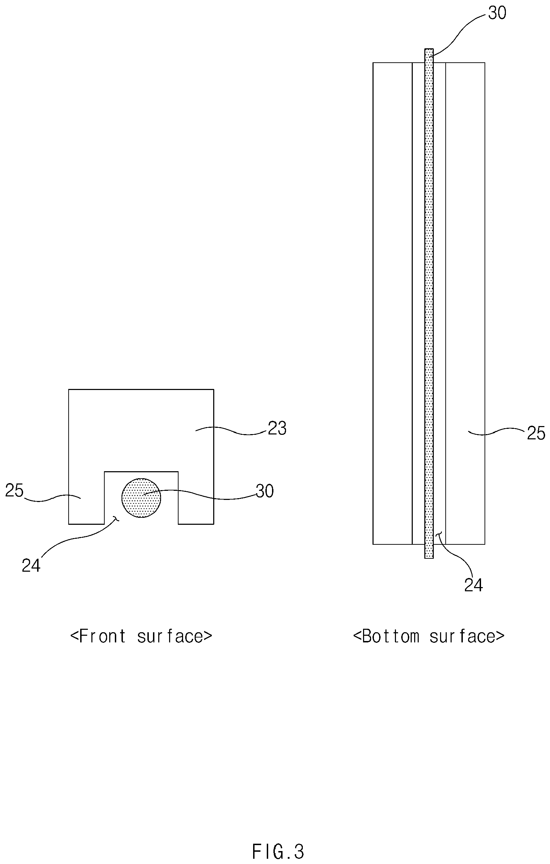

FIG. 2 is a simplified view illustrating the apparatus for manufacturing the unit cell according to an embodiment of the present invention, and FIG. 3 is front and bottom views of an upper sealing block.

As illustrated in the drawings, the apparatus for manufacturing the unit cell according to the present invention comprises a lower block 10, an upper block 20, and a heating wire cutter 30.

As the apparatus for manufacturing the unit cell, which is provided in this embodiment, is provided at a position disposed in the cutter 8 according to the related art, the lower separator 3b and the upper separator 3a continuously move in a longitudinal direction and are provided in a state in which a positive electrode 1 and a negative electrode 2 are stacked between the lower separator 3b and the upper separator 3a and on the upper separator 3a, respectively, i.e., a state in which a 'positive electrode/upper separator/negative electrode/lower separator' or a `negative electrode/upper separator/positive electrode/lower separator' are sequentially stacked from top to bottom.

The lower block 10 has a structure which is disposed under the lower separator 3b and in which a protrusion 15 s is formed at each of both sides with a recessed groove 14 interposed therebetween on a top surface of the lower block 10. In addition, the lower block 10 is formed by coupling a lower sealing block 13, which has a recessed groove 14 and a protrusion 15 and is disposed in a direction facing the lower separator 3b, to a lower heating block 11 provided with a built-in heater 12.

The upper block 20 has a structure which is vertically aligned with the lower block 10 above the upper separator 3a and in which a protrusion 25 is formed at each of both sides with a recessed groove 24 interposed therebetween on a bottom surface of the upper block 20. The upper block 20 may preferably have a symmetrical structure having the same size as the lower block 10, but if the protrusion 25 formed at a lower end thereof is vertically aligned with the protrusion 15 of the lower block 10, various shapes may be realized.

Furthermore, the upper block 20 may also have a structure in which an upper sealing block 23, which has a recessed groove 24 and a protrusion 25 and is disposed in a direction facing the upper separator 3a, and an upper heating block 21 provided with a built-in heater 22 are coupled to each other.

Here, it is preferable that each of the heaters 12 and 22 built into the lower heating block 11 and the upper heating block 21 is a sheath heater that uses electricity and has high energy efficiency.

The heaters 12 and 22 built into the lower heating block 11 and the upper heating block 21 may heat the protrusions 15 and 25 in a range of 70°C to 110°C, respectively, and each of the lower sealing block 13 and the upper sealing block 23 may be made of a metal material to transfer the heat generated by the heaters 12 and 22 to the protrusions 15 and 25. Here, the reason in which the temperature is limited to the range of 70°C to 110°C is because, when the temperature is less than 60°C, it is difficult to achieve efficient thermal fusion of the separator 3, and when the temperature exceeds 110°C, it is difficult to seal the separator 3 due to the melted separator 3.

The heating wire cutter 30 is heated to fuse and cut the separator 3 when being in contact with the separator 3 and is disposed in any one of the recessed groove 14 of the lower block 10 or the recessed groove 24 of the upper block 20. That is, although the configuration, in which the heating wire cutter 30 is disposed in the recessed groove 24 of the upper block 20 to cut the separator 3 when descending, is illustrated in FIG. 2, the heating wire cutter 30 may be disposed in the recessed groove 14 of the lower block 10 to cut the separator 3 when ascending.

The heating wire cutter 30 comprises a nichrome wire, and when current is applied, the nichrome wire generates resistance heat to cut the separator and is heated in a range of 200°C to 300°C. As illustrated in FIG. 3, the heating wire cutter 30 has a linear structure to correspond to a width of the separator 3. Although not shown in the drawing, the heating wire cutter 30 is coupled to a lift device to ascend and descend and also is coupled to a cable and power supplies for supplying current.

When the lower block 10 and the upper block 20 press and fix the lower separator 3b and the upper separator 3a, the heating wire cutter 30 descends (or ascends) to cut the lower separator 3b and the upper separator 3a.

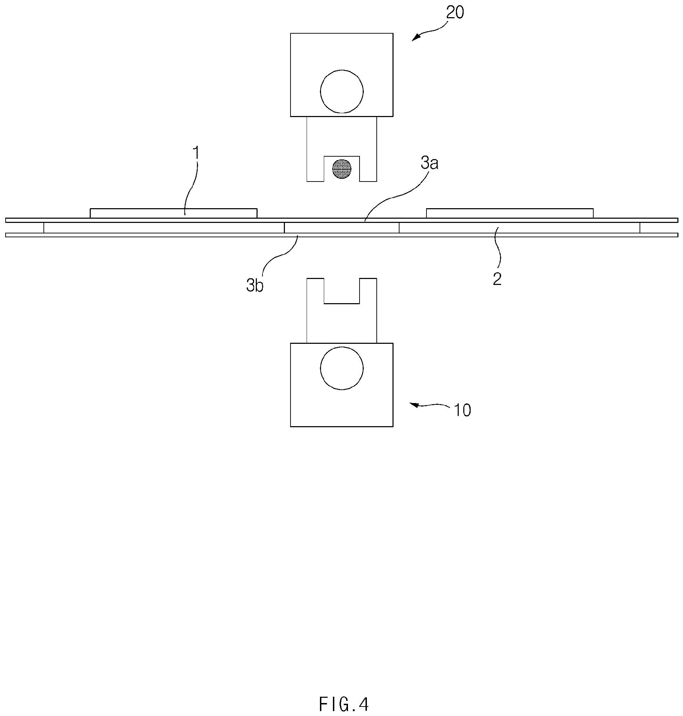

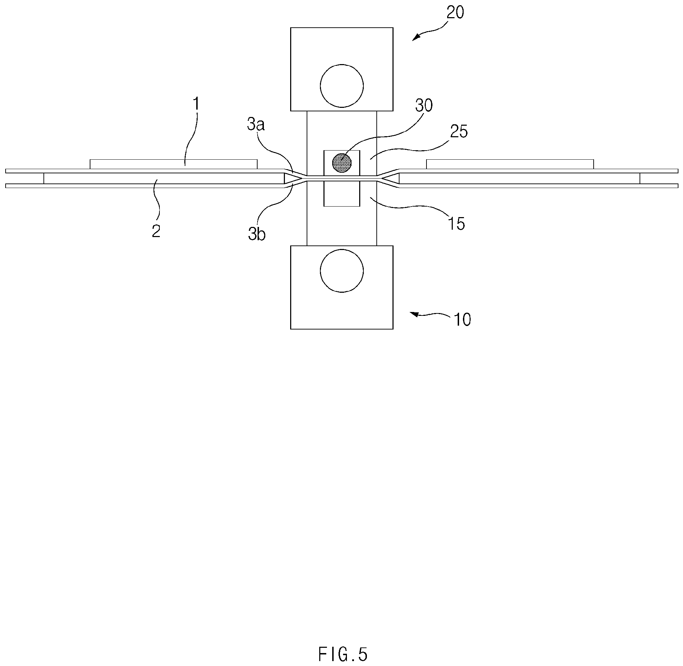

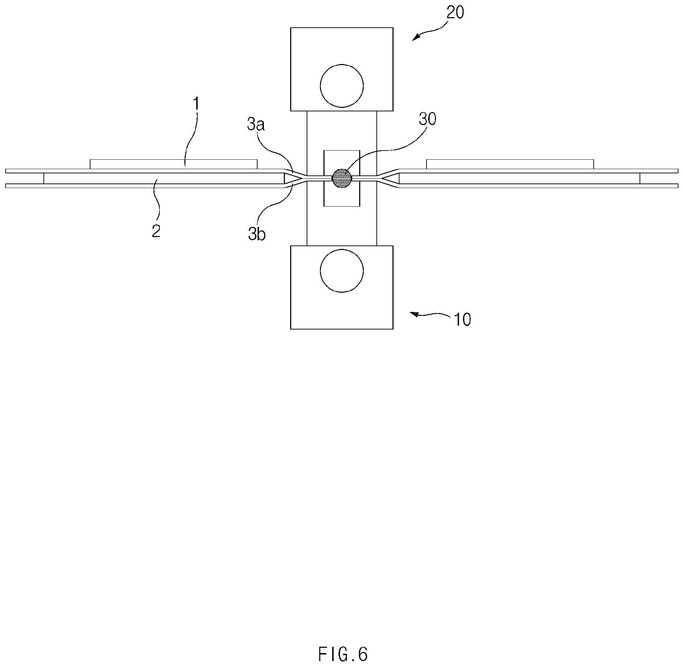

FIG. 4 is a view illustrating a state in which the apparatus for manufacturing the unit cell is disposed between adjacent electrodes (between adjacent positive electrodes or between adjacent negative electrodes) according to an embodiment of the present invention, FIG. 5 is a view illustrating a state in which the lower block ascends, and the upper block descends in the state of FIG. 4, and FIG. 6 is a view illustrating a state in which the heating wire cutter descends to cut the separator in the state of FIG. 5.

Referring to FIGS. 4 to 6, as described above, the apparatus for manufacturing the unit cell provided in this embodiment is provided at a position at which the cutter 8 for cutting the separator 3 in the structure according to the related art.

While the separators 3a and 3b and electrodes 1 and 2 are being transferred, the upper block 20 ascends, and the lower block 10 stands by in the descending state so as not to interfere with the separators 3a and 3b and the electrodes 1 and 2.

When only the upper separator 3a and the lower separator 3b are disposed between the lower block 10 and the upper block 20 and between the positive electrode 1 and the positive electrode 1, which are adjacent to each other (or between the negative electrode and the negative electrode), the movement of the separators 3a and 3b is temporarily stopped.

In addition, the upper block 20 descends, and the lower block 10 ascends, and as illustrated in FIG. 5, the protrusions 15 and 25 press the upper separator 3a and the lower separator 3b. Here, as described above, the lower block 10 and the upper block 20 comprises the built-in heaters 12 and 22 for heating the protrusions 15 and 25, respectively, and thus, the protrusions 15 and 25 are press and heat the separators 3a and 3b at the same time.

Thus, the separators 3a and 3b are sealed by heat and a pressure at points at which the protrusion 15 of the lower block 10 and the protrusion 25 of the upper block 20 press the separators 3a and 3b upward and downward, respectively.

After the separator 3 is sealed, as illustrated in FIG. 6, the heating wire cutter 3 descends to cut a portion between the sealed points. Here, it is preferable that the separator 3 is cut after being sealed. However, since the separator 3 is in the fixed state between the protrusions 15 and 25, the sealing and cutting may be performed at the same time.

### Second embodiment

In the present invention, a method for manufacturing a unit cell, which is capable of manufacturing the unit cell using the above-described manufacturing apparatus is provided as a second embodiment.

The manufacturing method provided in this embodiment comprises a process of laminating a separator 3 and electrodes 1 and 2, which are previously stacked in a predetermined order, and a process of applying heat to the separator to cut the separator.

That is, In the process of providing the separator 3 and the electrodes 1 and 2, a lower separator 3b and an upper separator 3a continuously move in a longitudinal direction, and also, the electrodes 1 and 2 and the separators 3 are provided in a state in which the electrodes 1 and 2 are stacked between the lower separator 3b and the upper separator 3a and on the upper separators 3a, respectively.

In addition, in the process of cutting the separator 3, the upper separator 3b and the upper separator 3b are pressed downward and upward to be fixed between the adjacent electrodes 1 and 2, and then, a heating wire cutter 30 applies heat to the lower separator 3b and the upper separator 3a to cut the lower separator 3b and the upper separator 3a.

Here, while or before the heating wire cutter 30 applies the heat to the lower separator 3b and the upper separator 3a to cut the lower separator 3b and the upper separator 3a, the sealing is performed at points at which the lower separator 3b and the upper separator 3a are pressed and fixed.

The present invention having the above-described configuration, since the heating wire cutter 30 may fuse and cut the separator 3 using the heat, the physical pressure may be minimized to significantly reduce the possibility of the folding of the separator 3.

In addition, the lower block 10 and the upper block 20 comprise built-in heaters 12 and 22 for heating protrusions 15 and 25, respectively. Thus, when the lower block 10 and the upper block 20 press the separators 3a and 3b, the separators 3a and 3b are sealed at points which are pressed by the protrusions 15 and 25. Therefore, since the cutting is performed in the state in which the lower separator 3b and the upper separator 3a are bonded to each other, the folding of the separator may be prevented from occurring.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Positive electrode
2: Negative electrode
3: Separator (3a: upper separator, 3b: lower separator)
10: Lower block
12, 22: Heater
14, 24: Recessed groove
15, 25: Protrusion
20: Upper block
30: Heating wire cutter

## Claims

1. An apparatus for manufacturing a unit cell, which cuts a lower separator and an upper separator between electrodes adjacent to each other in a process of manufacturing the unit cell provided in a state, in which the lower separator and the upper separator continuously move in a longitudinal direction, and the electrodes are stacked between the lower separator and the upper separator and on the upper separator, respectively, the apparatus comprising:
a lower block which is disposed under the lower separator and on which a protrusion is formed at each of both sides thereof with a recessed groove therebetween on a top surface thereof;
an upper block which is disposed above the upper separator so as to be vertically aligned with the lower block and on which a protrusion is formed at each of both sides with a recessed groove therebetween on a bottom surface thereof; and
a heating wire cutter disposed in any one of the recessed groove of the lower block or the recessed groove of the upper block to cut each of the separators using heat when being in contact with the separator,
wherein, when the lower block and the upper block press the lower separator and the upper separator, the heating wire cutter is in contact with the separators to cut the separators.

2. The apparatus of claim 1, wherein the heating wire cutter comprises a nichrome wire, and
when current is applied, the nichrome wire generates resistance heat.

3. The apparatus of claim 2, wherein the heating wire cutter is heated in a range of 200°C to 300°C.

4. The apparatus of claim 1, wherein each of the upper block and the lower block comprises a built-in heater configured to heat the protrusion, and
the separators are sealed at points at which the protrusions press the separators together.

5. The apparatus of claim 4, wherein the lower block is formed by coupling a lower sealing block, which has a recessed groove and a protrusion and is disposed in a direction facing the lower separator, to a lower heating block provided with a built-in heater, and
the upper block is formed by coupling an upper sealing block, which has a recessed groove and a protrusion and is disposed in a direction facing the upper separator, to an upper heating block provided with a built-in heater.

6. The apparatus of claim 5, wherein the heater that is built in each of the lower heating block and the upper heating block comprises a sheath heater.

7. The apparatus of claim 5, wherein the heater that is built in each of the lower heating block and the upper heating block heats the protrusion in a range of 70°C to 110°C.

8. The apparatus of claim 5, wherein each of the lower sealing block and the upper sealing block is made of a metal material.

9. A method for manufacturing a unit cell, in which electrodes are stacked between a lower separator and an upper separator and on the upper separator, respectively, the method comprising:
a process of providing the electrodes and the separators in a state in which the lower separator and the upper separator continuously move in a longitudinal direction, and the electrodes are stacked between the lower separator and the upper separator and on the upper separator, respectively; and
a process of applying heat to the lower separator and the upper separator to cut each of the separators by using a heating wire cutter in a state in which the lower separator and the upper separator are pressed upward and downward to be fixed between the electrodes adjacent to each other.

10. The method of claim 9, wherein, while or before the heating wire cutter applies the heat to the lower separator and the upper separator to cut the lower separator and the upper separator, sealing is performed at points at which the lower separator and the upper separator are pressed and fixed.
